Europäisches Patentamt

European Patent Office

Office européen des brevets

(19)

(11) Veröffentlichungsnummer: **0 081 815**
**B1**

(12) **EUROPÄISCHE PATENTSCHRIFT**

(45) Veröffentlichungstag der Patentschrift:
24.06.87

(21) Anmeldenummer: **82111407.1**

(22) Anmeldetag: **09.12.82**

(51) Int. Cl.⁴: **G 01 G 19/413**

(54) **Preisrechnende Waage.**

(30) Priorität: **16.12.81 DE 3149818**

(43) Veröffentlichungstag der Anmeldung:
**22.06.83 Patentblatt 83/25**

(45) Bekanntmachung des Hinweises auf die Patenterteilung:
**24.06.87 Patentblatt 87/26**

(84) Benannte Vertragsstaaten:
**AT BE CH DE FR GB IT LI NL SE**

(56) Entgegenhaltungen:
**DE - A - 2 456 691**
**DE - A - 2 938 724**

(73) Patentinhaber: **Bizerba-Werke Wilhelm Kraut GmbH & Co. KG., Wilhelm-Kraut-Strasse 41,
D-7460 Balingen 1 (DE)**

(72) Erfinder: **Schneider, Manfred, Steinstrasse 33,
D-7460 Balingen 1 (DE)**

(74) Vertreter: **Hoeger, Stellrecht & Partner,
Uhlandstrasse 14c, D-7000 Stuttgart 1 (DE)**

ACTORUM AG

## Beschreibung

Die Erfindung betrifft eine preisrechnende Waage mit einer ersten Tastatur zum Eingeben willkürlicher Grundpreise, mit einem Speicher zur Speicherung einer mehr als zehn betragenden Anzahl vorbestimmter, jeweils einer Abrufnummer zugeordneter Grundpreise und mit einer dem Abruf der gespeicherten Grundpreise dienenden, zweiten Tastatur, die N, jeweils einer Zahl zugeordnete Abruftasten umfasst, wobei N grösser als zehn ist.

Allgemein hat es die Erfindung mit elektronisch preisrechnenden Ladenwaagen zu tun, bei denen zur Bedienungs-Vereinfachung eine Anzahl kg-Grundpreise eingespeichert werden kann, die ein Verkäufer an einer Tastatur eingeben und somit abrufen kann.

Ältere bekannte elektronisch preisrechnende Ladenwaagen ohne Speicher haben eine sogenannte Zehner-Tastatur, die im wesentlichen die Tasten Null bis Neun, gelegentlich auch «00» aufweist und im übrigen noch Funktions-Tasten enthält, wie z.B. «Tara-Eingabe», «Summenzug», «Druck-Auslösung», usw.

Wenn z.B. in eine solche Waage ein kg-Grundpreis von 23,75 DM/kg eingegeben werden soll, werden nacheinander die Tasten 2, 3, 7 und 5 betätigt. In einem Anzeigefenster der Waage sieht man hierbei, wie sich diese Ziffern von rechts nach links in der Reihenfolge der Eingabe weiterschieben.

Zür Vereinfachung dieses Vorgangs werden bei weiteren bekannten elektronisch preisrechnenden Waagen bereits Speicher angebracht, deren Speicherstellen jeweils einen kg-Grundpreis enthalten können, die man ihrerseits mittels einer zweiten Tastatur abrufen kann. Diese zweite Tastatur, die mehr als zehn Abruftasten umfassen kann, ist in der Regel neben der üblichen Zehner-Tastatur an der Waage angeordnet. Das Einspeichern der kg-Grundpreise kann in einem Ladengeschäft von einem Geschäftsführer oder zuständigen Abteilungsleiter vorgenommen werden, und zwar unter Anwendung eines Schlüssels, der an der Waage eingesteckt, während des Einspeicherungs-Vorganges in eine bestimmte Position gedreht und danach wieder abgezogen wird.

Das Tastenfeld dieser zweiten Tastatur für die kg-Grundpreis-Speicherstellen kann z.B. 20 oder 24 Tasten enthalten, auf welchen die Nummern 1 bis 20 oder 1 bis 24 eingraviert sind.

Zum Abruf eines kg-Grundpreises durch eine Verkäuferin an der Waage ist dann nur eine dieser Tasten zu betätigen.

Der Vorteil eines solchen kg-Grundpreis-Abrufes ist die Zeitersparnis, da anstelle von eventuell 4 Tasten bei dem oben genannten Beispiel von DM 23,75 nur eine einzige Abruftaste zu betätigen ist.

Ein Nachteil liegt darin, dass man in der Anzahl der zu speichernden kg-Grundpreise je nach dem für die zweite Tastatur zur Verfügung stehenden Platz begrenzt ist. Es wäre z.B. unzweckmässig, 50 Extratasten für den kg-Grundpreis-Abruf an der Waage anzubringen, wenn man die Möglichkeit von 50 einzuspeichernden kg-Grundpreisen haben möchte. In der heutigen Praxis ist dies durchaus real, da man gelegentlich schon bis zu 100 gespeicherte Grundpreise benötigt.

Es gibt daher auch schon elektronisch preisrechnende Ladenwaagen, bei denen das Abrufen der gespeicherten kg-Grundpreise über die vorhandene Zehner-Tastatur vorgenommen werden kann, indem z.B. zum Abruf der Speicherstelle 43 nacheinander die Ziffern 4 und 3 einzutasten sind und danach noch eine Sondertaste «R» zu betätigen ist.

Nachteilig ist dabei, dass man drei Tasten zu betätigen hat, was dem Arbeits-Aufwand bei der direkten kg-Grundpreis-Eingabe nahekommt.

Um wenigstens das Betätigen der Sondertaste «R» einzusparen, gibt es elektronisch preisrechnende Waagen dieser Art, bei denen die «R»-Taste als Schalter ausgebildet ist, so dass man diesen einschalten kann und danach alle eingegebenen Ziffernfolgen von der Waage nur noch als Speicher- oder Abrufnummer für kg-Grundpreise verstanden werden.

Wenn dieser Schalter wieder in die Ausgangslage gebracht wird, gelten die Ziffern-Eingaben wieder direkt als kg-Grundpreise.

Da das Betätigen eines Schalters bei häufigem Wechsel zwischen kg-Grundpreis-Direkteingabe-Betrieb und kg-Grundpreis-Abruf-Betrieb (PLU genannt = price look up) als unbequem empfunden werden kann, sind elektronisch preisrechnende Ladenwaagen auf den Markt gekommen (DE-PS 2 938 724), bei denen die direkte kg-Grundpreis-Eingabe erst bei 1,-- DM beginnt und alle anderen Werte, die unter der Zahl 100 liegen, für die Waage als Speicher-Nummern für kg-Grundpreise gelten. So bedeutet die Zahl 43 z.B. die Speicherstelle Nr. 43 und damit nicht mehr 0,43 DM/kg.

Der Nachteil der letzteren Ausführungsform ist der, dass man an einer solchen Waage keine kg-Grundpreise unter 1,-- DM direkt eingeben kann.

Die Erfindung umgeht in einer bevorzugten Ausführungsform die verschiedenen Nachteile in der Weise, dass wie bei bekannten Waagen eine besondere zweite Tastatur für den Abruf der gespeicherten kg-Grundpreise vorgesehen wird, deren Tasten von 1 bis z.B. 23 durchnumeriert sind, dass aber zusätzlich eine mit 0 bezeichnete Taste vorhanden ist, und dass man mittels dieser Tastatur aufgrund der zugehörigen Programmierung auch Speicher abrufen kann, deren Kennziffer über der Zahl 23 liegt, z.B. 43, indem man die Abruftasten 4 und 3 nacheinander betätigt, oder 229, indem man die Taste 22 und danach die Taste 9 betätigt oder 170, indem man die Tasten 17 und 0 betätigt. Auf diese Weise sind durch jeweils zwei Tasten auch dreistellige Abrufnummern darstellbar.

Die Erfindung besteht generell darin, dass der Speicher mehr als N Speicherstellen für Grundpreise enthält und dass Abrufnummern, welche kleiner oder gleich N sind, durch jeweils eine einzige Abruftaste und Abrufnummern, welche grösser N sind, durch entsprechende Kombination von mehr als einer Abruftaste der zweiten Tastatur eingebbar sind.

Die nachstehende Beschreibung dient im Zusammenhang mit beiliegender Zeichnung, auf der ein Ausführungsbeispiel schematisch dargestellt ist, der weiteren Erläuterung der Erfindung.

Eine Waage 1 ist an einem Mikrocomputer 2 mit Speicherstellen für kg-Grundpreise angeschlossen. Der Mikrocomputer 2 verarbeitet die Gewichtswert-Informationen der Waage derart, dass diese mit dem kg-Grundpreis multipliziert werden, der an den Tastaturen 3 und 4 eingegeben bzw. abgerufen wird, und dass das Ergebnis an einer Ziffern-Anzeige 5 als Kaufpreis angezeigt sowie auch in einem Drucker 6 auf einen Streifen gedruckt wird.

Der eingegebene kg-Grundpreis wird an einer Ziffern-Anzeige 7 angezeigt. Das Gewicht einer auf der Waage 1 liegenden Ware 8 wird an einer Ziffern-Anzeige 9 angezeigt.

Im Drucker 6 werden mit dem Kaufpreis auch der zugehörige kg-Grundpreis und das Gewicht abgedruckt.

An der Waage 1 befindet sich ein Schlüsselschalter 10, der mit dem Mikrocomputer 2 verbunden ist. Es ist dies ein Drehschalter, der mit eingestecktem Schlüssel in verschiedene Positionen gebracht werden kann, wobei in jeder Position ein bestimmter elektrischer Kontakt geschlossen ist, der von dem Mikrocomputer 2 abgefragt wird.

Zum Einspeichern der kg-Grundpreise wird dieser Schlüsselschalter 10 in «Programmierstellung» gebracht. Daraufhin wird an der zweiten Tastatur 4, die 24 Tasten einschliesslich 0-Taste umfasst, eine Taste mit der gewünschten Speicher- oder Abrufnummer betätigt und danach an der ersten Tastatur 3, die als übliche Zehner-Tastatur ausgebildet ist, der zugehörige kg-Grundpreis eingegeben und danach die Taste P der Tastatur 3 betätigt. Abrufnummern, die über der Zahl 23 liegen, werden durch entsprechende Kombination der Tasten 0 bis 23 der Tastatur 4 dargestellt.

Beispiel: An der Speicherstelle Nr. 41 soll der kg-Grundpreis 18,53 DM/kg gespeichert werden. Die Tastenfolge ist dann: 4 – 1 – 1 – 8 – 5 – 3 – P, wobei 4–1 an der Tastatur 4 und 1–8–5–3 sowie P an der Tastatur 3 eingegeben werden.

Zum Abrufen der kg-Grundpreise beim Kundenbedienungs-Betrieb an der Waage ist der Schlüssel abgezogen. Mit Eingabe der Speichernummer des gewünschten kg-Grundpreises an der Tastatur 4 erscheint dieser sofort in dem zugehörigen Anzeigefenster 7. Die Nummer der Speicherstelle, die man gewählt hat, ist in dem Anzeigefenster 11 zu sehen.

Für häufig vorkommende kg-Grundpreise sind die Nummern 1 bis 23 oder 0 bis 23 vorgesehen. Diese sind am einfachsten und am schnellsten abzurufen, nämlich durch Betätigung einer einzigen Taste.

Bei kg-Grundpreis-Speicherstellen, deren Nummer über der Zahl 23 liegt, z.B. 43, hat man nacheinander die Tasten 4 und 3 an der Tastatur 4 zu betätigen.

Die besondere Abruftastatur 4 ist auch zum Abruf von dreistelligen Speicher-Nummern geeignet, in dem Fall des vorliegenden Beispiels bis zur Nummer 239. Vom Mikrocomputer aus gesehen besteht kein Problem, Speicherplatz für diese Anzahl von kg-Grundpreisen vorzusehen.

Zum direkten Eingeben nichtgespeicherter Grundpreise dient wie üblich die Zehner-Tastatur 3.

Ein Vorteil der beschriebenen Anordnung ist, dass einer an der Waage arbeitenden Verkäuferin für gespeicherte und direkt einzugebende Grundpreise jeweils gesonderte Tastaturen 4 bzw. 3 zur Verfügung stehen. Hierdurch sind Bedienungsfehler weitgehend ausgeschlossen. Ausserdem ist die Anzahl der Speicherstellen erhöht, es können Grundpreise kleiner als 1,-- DM gespeichert werden, bei Vorhandensein einer 0-Taste in der Tastatur 4 können Abrufnummern lückenlos eingegeben werden und drei- (oder mehr-)stellige Abrufnummern sind mittels lediglich zwei Abruftasten darstellbar.

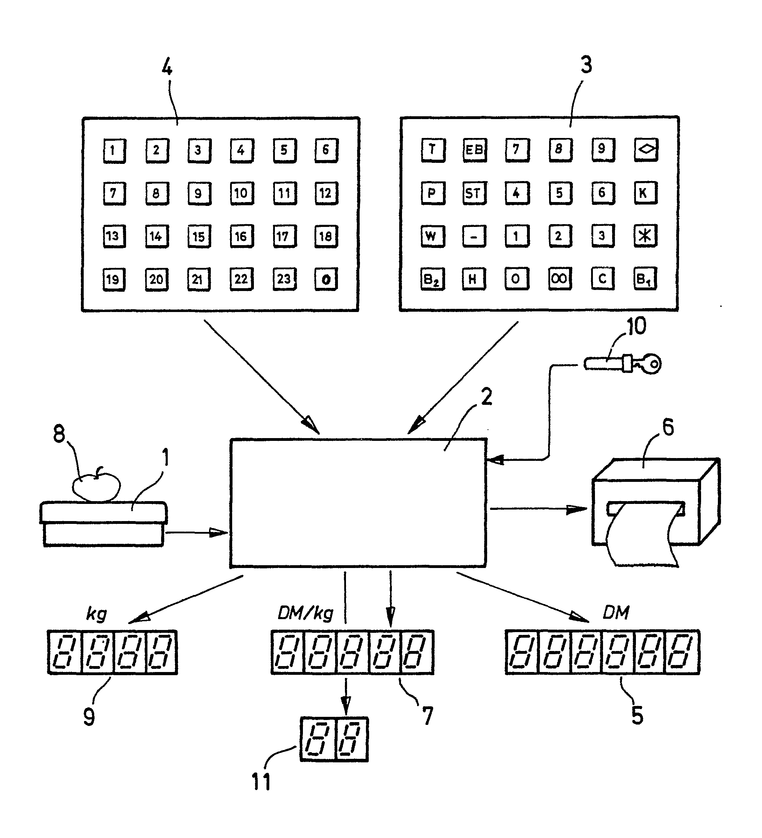

## Patentansprüche

1. Preisrechnende Waage mit einer ersten Tastatur (3) zum Eingeben willkürlicher Grundpreise, mit einem Speicher (2) zur Speicherung einer mehr als zehn betragenden Anzahl vorbestimmter, jeweils einer Abrufnummer zugeordneter Grundpreise und mit einer dem Abruf der gespeicherten Grundpreise dienenden, zweiten Tastatur (4), die N, jeweils einer Zahl zugeordnete Abruftasten umfasst, wobei N grösser als zehn ist, dadurch gekennzeichnet, dass der Speicher (2) mehr als N Speicherstellen für Grundpreise enthält und dass Abrufnummern, welche kleiner oder gleich N sind, durch jeweils eine einzige Abruftaste und Abrufnummern, welche grösser N sind, durch entsprechende Kombination von mehr als einer Abruftaste der zweiten Tastatur (4) eingebbar sind.

2. Waage nach Anspruch 1, dadurch gekennzeichnet, dass die zweite Tastatur (4) eine der Ziffer 0 zugeordnete Abruftaste umfasst.

3. Waage nach Anspruch 1 oder 2, dadurch gekennzeichnet, dass Abrufnummern, welche grösser N sind und drei oder mehr Stellen haben, durch Betätigung von lediglich zwei Abruftasten eingebbar sind, z.B. die Abrufnummer 229 durch Betätigung der den Zahlen 22 und 9 zugeordneten Abruftasten.

## Claims

1. Price-calculating scales with a first keyboard (3) for keying in arbitrary basic prices, with a memory (2) for storing a number greater than ten of predetermined basic prices associated in each case with a call number, and with a second keyboard (4) used for requesting the stored basic prices which covers N request keys each associated with a number, N being greater than ten, characterised in that the memory (2) contains more than N memory cells for basic prices, and in that call numbers, which are smaller or equal to N, can be keyed in in each case by one single request key, and call numbers which are greater than N can be keyed in by the corresponding combination of more than one request key of the second keyboard (4).

2. Scales according to Claim 1, characterised in that the second keyboard (4) has a request key associated with the digit 0.

3. Scales according to Claim 1 or 2, characterised in that call numbers which are greater than N and have three or more places can be keyed in by the actuation of only two request keys, e.g. call number 229 by the actuation of the request keys associated with the numbers 22 and 9.

**Revendications**

1. Balance calculatrice des prix ayant un premier clavier (3) pour l'introduction à volonté de prix de base, avec une mémoire (2) pour la mémorisation d'un nombre supérieur à dix de prix de base prédéterminés correspondant chacun à un numéro d'appel, et un second clavier (4) servant à appeler les prix de base mémorisés qui comprend N touches d'appel correspondant chacune à un nombre, N étant supérieur à dix, caractérisée en ce que la mémoire (2) a plus de N emplacements de mémoire pour des prix de base, et en ce que des numéros d'appel qui sont inférieurs ou égaux à N peuvent être introduits chacun par une touche d'appel unique respective, et des numéros d'appel qui sont supérieurs à N peuvent être introduits par une combinaison correspondante de plus d'une touche d'appel du second clavier (4).

2. Balance selon la revendication 1 caractérisée en ce que le second clavier (4) comprend une touche d'appel correspondant au chiffre 0.

3. Balance selon la revendication 1 ou 2 caractérisée en ce que des numéros d'appel supérieurs à N et ayant trois chiffres ou plus peuvent être introduits par la manœuvre de deux touches d'appel seulement, par exemple le numéro d'appel 229 par la manœuvre des touches d'appel correspondant aux nombres 22 et 9.

4

3

1 2 3 4 5 6

7 8 9 10 11 12

13 14 15 16 17 18

19 20 21 22 23 0

T EB 7 8 9 ◇

P ST 4 5 6 K

W − 1 2 3 ✳

B₂ H 0 ∞ C B₁

10

8

1

2

6

kg

*DM/kg*

*DM*

9

11

7

5